# EUROPEAN PATENT APPLICATION

(11) **EP 2 103 825 A1**
(43) Date of publication of application: **23.09.2009**
(21) Application number: 08703378.3
(22) Date of filing: 17.01.2008
(51) Int. Cl.: F16C 33/54, F16C 19/30

(54) **RETAINER FOR THRUST ROLLER BEARING AND THRUST ROLLER BEARING**

(30) Priority: 19.01.2007 JP 2007009876
(71) Applicant: JTEKT Corporation, Osaka-shi Osaka 542-8502 (JP)
(72) Inventor: TOYAMA, Masaki, Osaka-shi Osaka 542-8502 (JP); SATOU, Takahiko, Osaka-shi Osaka 542-8502 (JP)
(74) Representative: Schaeberle, Steffen
(86) International application number: PCT/JP2008/050523
(87) International publication number: WO 2008/088014

(57) **Abstract**

A cage 2 for a thrust roller bearing 1 includes a sheet of annular plate, a plurality of pockets 5 in a rectangular shape for containing needle rollers 3, which are formed at a plurality of circumferential positions of the annular plate by punching it in a direction of thickness, and projected parts 8, 9 which are provided on an inner wall face of each of the pockets 5 at an outer diameter side and at an inner diameter side in such a manner that the projected parts 8, 9 are projected toward rotation centers of axial end faces of the needle roller 3, and bent at an angle in a perpendicular direction with respect to a plane of rotation of the cage 2, whereby an apex at a distal end of the projected part is brought into point contact with the rotation centers of the axial end faces of the needle roller 3 which is contained in the pocket.

## Description

### TECHNICAL FIELD

The present invention relates to a cage for a thrust roller bearing and the thrust roller bearing.

### BACKGROUND ART

A number of thrust roller bearings are provided in respective sections of an automobile such as an automatic transmission. In order to reduce fuel cost of the automobile, it is necessary to decrease loss of rotation torque, by reducing rotation resistance of the thrust roller bearing to the least of possibility.
The thrust roller bearing of this type is so constructed that rollers are respectively contained in pockets having a rectangular shape in a plan view which are provided in a cage.
In this thrust roller bearing, the rollers are urged outwardly in a radial direction, by an action of a centrifugal force. Therefore, axial outer end faces of the rollers are respectively brought into sliding contact with edges of inner peripheral faces of the pockets at an outer diameter side. Friction in an area in this sliding contact becomes the rotation resistance of the thrust roller bearing. The higher the rotation speed is, the larger the centrifugal force of the rotation grows, and hence, there is such tendency that the rotation resistance is increased, and loss of the rotation torque is increased.
In view of the above, a conventional cage for the thrust roller bearing is provided with projected parts adapted to be respectively butted against rotation centers of axial outer end faces and axial inner end faces of the rollers which are contained in the pockets thereby to pivotally support the rollers, on respective inner wall faces of the pockets (Reference should be made to Patent Publication No. JP-2004-211824, for example).

### Disclosure of the Invention

### PROBLEMS THAT THE INVENTION IS TO SOLVE

The conventional cage for the thrust roller bearing is provided with the projected parts adapted to be respectively butted against the rotation centers of the axial outer end faces and the axial inner end faces of the rollers thereby to pivotally support the rollers, on the respective inner wall faces of the pockets. However, because each of the projected parts having a determined wall thickness is directed toward the rotation center of each of the rollers, the projected part is brought into linear contact with the end face of the roller in a direction of thickness thereof. Therefore, there has been such a problem that loss of the rotation torque still occurs.
The invention has been made in order to solve the above described problem, and it is an object of the invention to obtain a cage for a thrust roller bearing in which loss of rotation torque is decreased, by reducing rotation resistance due to friction between an inner wall face of a pocket and an end face of a roller, and the thrust roller bearing.

### Means for Solving the Problems

A cage for a thrust roller bearing according to an aspect of the invention comprises: a sheet of annular plate; a plurality of rectangular pockets for containing rollers, which are formed at a plurality of circumferential positions of the annular plate by punching the annular plate in a direction of thickness; and a projected part which is provided on an inner wall face of each of the pockets at an outer diameter side, is projected toward a rotation center of an axial end face of the roller contained in the pocket, and is bent at an angle in a perpendicular direction with respect to a plane of rotation of the cage in such a manner that an apex at a distal end of the projected part is brought into point contact with the rotation center of the axial end face.
Moreover, a thrust roller bearing according to the invention includes the cage for the thrust roller bearing as described above, and the rollers which are respectively contained in the pockets in the cage for the thrust roller bearing.

### ADVANTAGE OF THE INVENTION

In the cage for the thrust roller bearing according to the invention, the projected part is provided on the inner wall face of the pocket at least at the outer diameter side out of the outer diameter side and the inner diameter side, in such a manner that the projected part is projected toward the rotation center of the axial end face of the roller, and bent at an angle in the perpendicular direction with respect to the plane of rotation of the cage, whereby the apex at the distal end of the projected part is brought into point contact with the rotation center of the axial end face of the roller which is contained in the pocket. Therefore, there is such advantage that the apex at the distal end of the projected part is brought into point contact with the rotation center of the axial end face of the roller thereby to truly pivotally support the roller.
Moreover, the thrust roller bearing according to the invention includes the cage for the thrust roller bearing as described above, and the rollers which are respectively contained in the pockets in the cage for the thrust roller bearing. Therefore, the rotation center of the axial end face of the roller is brought into point contact with the apex at the distal end of the projected part, and the roller is truly pivotally supported with respect to the apex at the distal end. As the results, there is such advantage that friction resistance on the axial outer end face of the roller with respect to the cage becomes nearly zero, whereby rotation resistance due to contact in this region is substantially eliminated, and loss of rotation torque of the bearing can be remarkably decreased.

### BRIEF DESCRIPTION OF THE DRAWINGS

Fig. 1 is a plan view showing a thrust roller bearing according to Embodiment 1 of the invention.
Fig. 2 is an enlarged perspective view showing an area surrounding a pocket in a cage for the thrust roller bearing.
Fig. 3 is a sectional view of the cage for the thrust roller bearing.

### BEST MODE FOR CARRYING OUT THE INVENTION

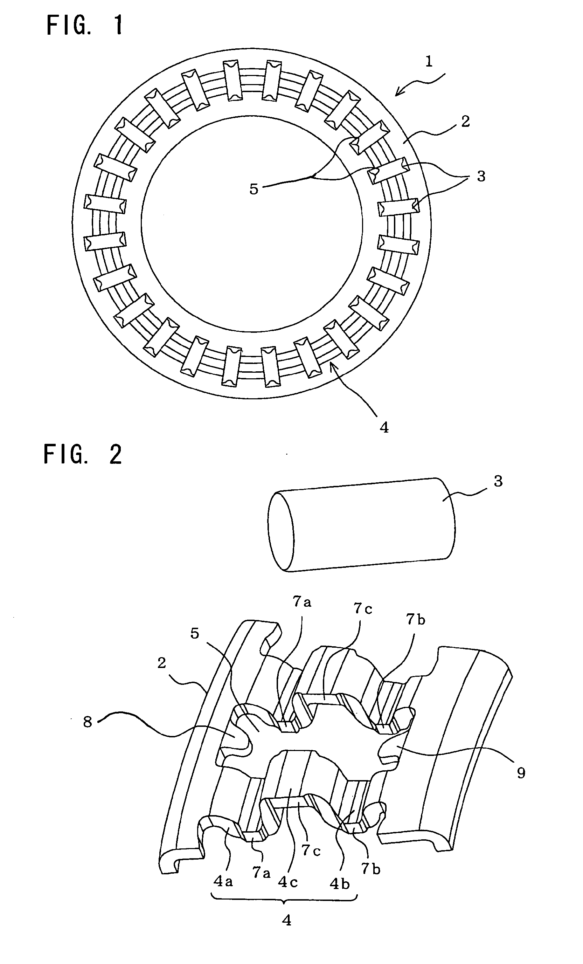

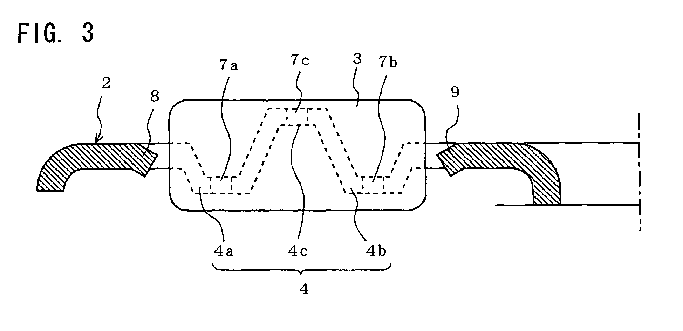

Fig. 1 is a plan view showing a needle roller thrust bearing as the thrust roller bearing according to Embodiment 1 of the invention, Fig. 2 is an enlarged perspective view showing an area surrounding a pocket in a cage for the thrust roller bearing, and Fig. 3 is a sectional view of the cage for the thrust roller bearing.
A thrust roller bearing 1 in Embodiment 1 of the invention includes a cage 2, and a plurality of needle rollers 3 as the rollers.
The cage 2 is formed of a sheet of an annular plate. A waveform folded part 4 in a shape of waving in a radial direction is formed by drawing, in a radially halfway region of the cage 2.
This waveform folded part 4 includes an outer diameter side protruding portion 4a, an inner diameter side protruding portion 4b, and an intermediate protruding portion 4c which are protruded alternately in the radial direction, substantially equally at one side and at the other side in the direction of thickness of the cage 2. The outer diameter side protruding portion 4a and the inner diameter side protruding portion 4b are protruded at one side in the direction of thickness of the cage 2, while the intermediate protruding portion 4c is protruded at the other side in the direction of thickness of the cage 2.

In the waveform folded part 4 of the cage 2, pockets 5 each having a rectangular shape in a plan view are formed by punching in the direction of thickness, at a plurality of circumferential positions, in a range from a fold starting point at the outer diameter side to a fold starting point at the inner diameter side. The needle rollers 3 are respectively contained in these pockets 5 so as to freely rotate and so as not to be detached.
Specifically, the outer diameter side protruding portion 4a, the inner diameter side protruding portion 4b, and the intermediate protruding portion 4c which are positioned right and left in the circumferential direction on the inner wall face of the pocket 5 are provided with hooks 7a, 7b, 7c which are projected into the pocket 5, at three positions in respective apex parts of the protruding portions.
Because of these hooks 7a, 7b, 7c, the pocket 5 is made narrower than a diameter of the needle roller 3, at the three positions in the radial direction, so that the needle roller 3 may not be withdrawn from the pocket 5. It is to be noted that the needle roller 3 is forcibly fitted into the pocket 5 to be contained therein.

Projected parts 8, 9 which are projected into the pocket 5 are formed on the inner wall face of the pocket 5 at the outer diameter side and at the inner diameter side. These projected parts 8, 9 are projected in a curved state toward rotation centers of the axial outer end face and the axial inner end face of the needle roller 3, and bent at an angle in a perpendicular direction with respect to a plane of rotation of the cage 2. Specifically, the projected parts 8, 9 are bent in a downward direction in Fig. 2.
Moreover, root portions of the projected parts 8, 9 are offset by a bending amount, so that the projected parts 8, 9 which are projected into the pocket 5 may be brought into point contact with the rotation centers of the axial outer end face and the axial inner end face of the needle roller 3.
In this manner, the projected parts 8, 9 which are projected into the pocket 5 in the curved state are projected toward the rotation centers of the axial outer end face and the axial inner end face of the needle roller 3, and at the same time, bent at an angle in the perpendicular direction with respect to the plane of rotation of the cage 2. As the results, the projected parts 8, 9 are brought into point contact with the rotation centers of the axial outer end face and the axial inner end face of the needle roller 3 thereby to truly pivotally support the needle roller 3.

Then, a method for producing the cage 2 will be briefly described.
As a first step, a center hole is formed by punching at a determined position of a sheet of metal plate (such as SPCD according to JIS standard), and then, the waveform folded part 4 is formed by conducting a drawing work. Thereafter, the pockets 5 are formed by punching, and an outer shape part is cut away. The aforesaid projected parts 8, 9 and the hooks 7a, 7b, 7c are formed simultaneously with this formation of the pockets 5.
Thereafter, the projected parts 8, 9 are bent at an angle in the perpendicular direction with respect to the plane of rotation of the cage 2, by bending work with a press.
For this purpose, a punching die for the pockets 5 has been produced in advance in such a shape as corresponding to a shape of the pocket 5 including the projected parts 8, 9 and the hooks 7a to 7c.

In the thrust roller bearing 1 having the cage 2 as described above, each of the needle rollers 3 is urged outwardly in the radial direction by an action of a centrifugal force, and the axial outer end face of the needle roller 3 is brought into contact with the projected part 8 which is provided on the inner wall face of the pocket 5 at the outer diameter side and bent at an angle in the perpendicular direction with respect to the plane of rotation of the cage. On this occasion, the rotation center of the axial outer end face of the needle roller 3 is brought into point contact with an apex at a distal end of the projected part 8, and thus, the needle roller 3 comes into a truly pivotally supported state with respect to the projected part 8.
In this embodiment, the apex part at the distal end is formed by an edge of an inner wall face of the center hole punched in the metal plate which is material for the cage. In this case, the apex part at the distal end is formed simultaneously with punching work of the pocket and press bending work of the projected part, and hence, working cost can be reduced.
According to this structure, because friction resistance of the axial outer end face of the needle roller 3 with respect to the cage 2 becomes almost zero, the rotation resistance of the thrust roller bearing 1 is remarkably reduced, and loss of the rotation torque of the bearing is remarkably decreased.

In such situation that the thrust roller bearing 1 eccentrically rotates, the end face of the needle roller 3 at the outer diameter side may be brought into contact with the projected part 9 provided on the inner wall face of the pocket 5 at the outer diameter side, or the end face of the needle roller 3 at the inner diameter side may be brought into contact with the projected part 9 provided on the inner wall face of the pocket 5 at the inner diameter side.
Even in such situation, the rotation center of the axial outer end face of the needle roller 3 is brought into point contact with the apex at the distal end of the projected part 8, while the rotation center of the axial inner end face of the needle roller 3 is brought into point contact with the apex at the distal end of the projected part 9, and thus, the needle roller 3 comes into a truly pivotally supported state with respect to the apexes at the distal ends of the projected parts 8, 9.
Accordingly, in such situation that the thrust roller bearing 1 has eccentrically rotated, the rotation resistance of the thrust roller bearing 1 is remarkably reduced, and it is advantageously attained that loss of the rotation torque of the bearing is remarkably decreased.
The apex at the distal end is not limited to such a shape as described in the above described embodiment, but may be formed as a convex part which is provided at either position on the inner wall face of the punched hole.

Although in the above described Embodiment 1, the projected parts 8, 9 which are projected into the pocket 5 are bent in a downward direction as shown in Fig. 2, it is also possible to bend them in an upward direction.
Moreover, although in the above described Embodiment 1, the projected parts 8, 9 which are projected into the pocket 5 and bent at an angle in the perpendicular direction with respect to the plane of rotation of the cage are provided, it is also possible to provide at least the projected part 8 which is positioned only at the outer diameter side.
Further, although the needle roller bearing is exemplified in the above described Embodiment 1, the invention can be also applied to an ordinary roller bearing.

### Industrial Application

In case where the thrust roller bearing 1 as described above is used in a transmission of an automobile, for example, rotation torque of the transmission is reduced, and consequently, the thrust roller bearing can contribute to reduction of fuel cost of the automobile.

## Claims

1. A cage for a thrust roller bearing comprising:
a sheet of annular plate;
a plurality of rectangular pockets for containing rollers, which are formed at a plurality of circumferential positions of the annular plate by punching the annular plate in a direction of thickness; and
a projected part which is provided on an inner wall face of each of the pockets at an outer diameter side, is projected toward a rotation center of an axial end face of the roller contained in the pocket, and is bent at an angle in a perpendicular direction with respect to a plane of rotation of the cage in such a manner that an apex at a distal end of the projected part is brought into point contact with the rotation center of the axial end face.

2. The cage for the thrust roller bearing according to claim 1, wherein the apex at the distal end is formed by an edge of the inner wall face of the pocket.

3. The cage for the thrust roller bearing according to claim 1 further comprising a projected part which is provided on the inner wall face of each of the pockets at an inner diameter side, is projected toward the rotation center of the axial end face of the roller, and is bent at an angle in a perpendicular direction with respect to the plane of rotation of the cage in such a manner that an apex at a distal end of the projected part is brought into point contact with the rotation center of the axial end face.

4. The cage for the thrust roller bearing according to claim 1, wherein a waveform folded part in a shape of waving in a radial direction is formed in a radially halfway region of the annular plate, and the waveform folded part includes an outer diameter side protruding portion, an inner diameter side protruding portion, and an intermediate protruding portion which are protruded alternately in the radial direction, substantially equally at one side and at the other side in the direction of thickness of the annular plate.

5. The cage for the thrust roller bearing according to claim 4, wherein the outer diameter side protruding portion, the inner diameter side protruding portion, and the intermediate protruding portion are provided with hooks which are projected into the pocket, on respective apex parts of the protruding portions.

6. A thrust roller bearing comprising the cage for the thrust roller bearing according to claim 1, and the rollers which are respectively contained in the pockets in the cage for the thrust roller bearing.

7. A method of producing a cage for a thrust roller bearing according to claim 1, comprising:
forming the annular plate by punching a center hole at a determined position of a sheet of metal plate;
simultaneously forming the pockets and the projected part, by punching the annular plate; and
bending the projected part at an angle in the perpendicular direction with respect to the plane of rotation of the cage, by bending work with a press.
